# EUROPEAN PATENT APPLICATION

(11) **EP 2 363 786 A2**
(43) Date of publication of application: **07.09.2011**
(21) Application number: 11155420.0
(22) Date of filing: 22.02.2011
(51) Int. Cl.: G06F 3/042

(54) **Image sensor for finger mouse**

(30) Priority: 05.03.2010 GB 1003723
(71) Applicant: STMicroelectronics (Research & Development) Limited, Marlow, Buckinghamshire SL7 1YL (GB)
(72) Inventor: Raynor, Jeffrey, Edinburgh Lothian EH12 5HZ (GB)
(74) Representative: McBride, Peter Hill

(57) **Abstract**

A "fingermouse" image sensor is provided. An array of radiation sensitive pixels is formed on an image sensing die, and a principle optical axis of radiation incident on the pixel array is inclined with respect to a direction perpendicular to the pixel array. The pixel array is formed off-centre within the image sensing die, as close as possible to the die edge.

## Description

The present invention relates to improvements in or relating to image sensors, in particular digital image sensors.

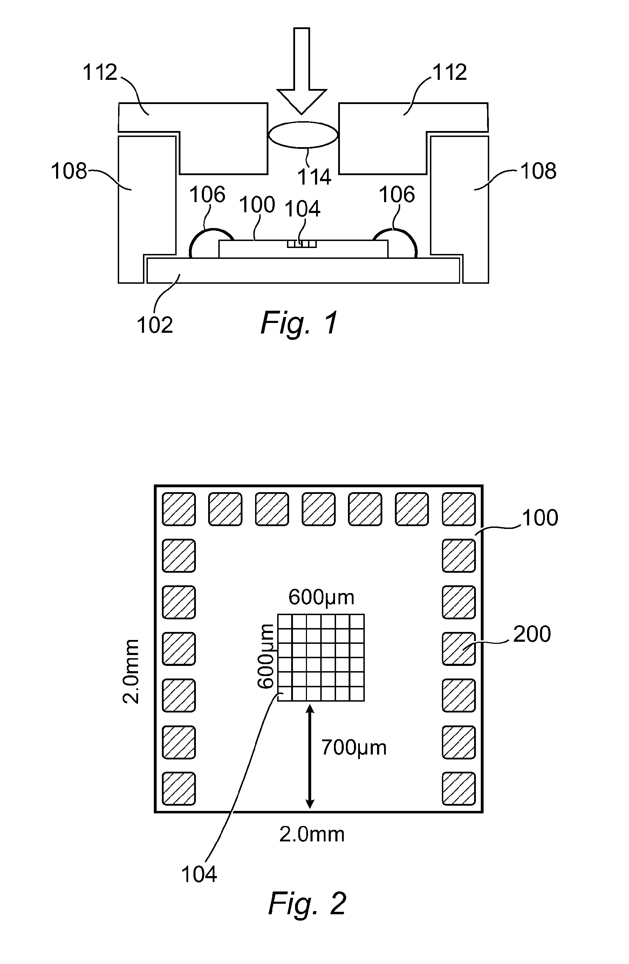

In most image sensors the image plane is designed to be close to the centre of the die. This prior art arrangement is shown in Fig. 1 in which an image sensor die 100 attached to or formed on or in a substrate 102. The die 100 comprises a pixel array 104 which is designed to lie in the image plane of the optical system of the sensor. The die 100 is typically electrically connected to the substrate 102 via wire bonds 106. A housing 108 is provided which may support or contain a holder 112 for a lens 114 or other optical element which may manipulate or focus incident radiation 110, such as electromagnetic radiation in the visible and/or infra-red range. The pixel array 104 is typically designed to be sensitive to a particular portion of the electromagnetic spectrum. The die 100 is placed at the centre of the package, as defined by the outer limits of the housing 108. Typically the optical axis will be perpendicular to the plane of the sensor as shown in Fig. 1, the arrow 110 being representative of the direction of the optical axis. It is also generally thought of as advantageous to have a centrally positions die for symmetry reasons, as having the same length of bond wires helps match the mechanical stresses and electrical impendence that act at each bond wire.

Fig. 2 shows a plan view of the die 100 and the pixel array 104 shown in Fig. 1. The dimensions of the die 100, pixel array 104 and the housing 108 may vary depending upon the type of image sensor design and the type of application for which the image sensor is to be used, however as a representative example, the die 100 may have a size of 2 x 2 mm and the pixel array may have a size of 0.6 by 0.6 mm and be positioned centrally within the die 100.

The die 100 is provided with a plurality of bond pads 200 around its upper surface. The bond pads 200 are metallic elements to which a bond wire 106 can be attached in a well known manner. It is also possible for the bond pads to provide basis for contact with a solder bump if the die is to be housed in a chip-scale package. In the specific example of Fig. 2 there will be a clearance of 700 µm between the edge of the pixel array and the edge of the die.

The pixel array 104 is shown as a six by six pixel array in the example of Fig. 2. However, it will be appreciated that this is for the purposes of illustration only and that the disclosure is not limited to any particular number of pixels. For optical mouse type sensors the number of pixels will be relatively few and the size of the pixels will be relatively large as compared with image sensors used for image capture in a digital still camera, which will comprise many times more pixels which will be much smaller than an optical mouse type pixel.

The number of wire bonds 106 and corresponding bond pads 200 that is provided depends upon the complexity of the chip in the image sensing die and the various functions that may be performed on it. Bond pads may be provided along every edge of the die 100, however it is possible that bond pads may be provided along only selected edges of the die 100 or along only portions of one or more edges. In the example of Fig. 2, bond pads 200 are provided along three out of the four edges of the perimeter of the die 100. Other arrangements of bond pads are known in the art. Image sensors may be incorporated in a wide variety of products. One such product is an optical mouse, which is a popular pointing device used predominantly in desktop and laptop computers, and which will herein be described as a "PC optical mouse". The PC optical mouse is moved over a mousing surface, such as a desk or special mouse mat. The body of the PC optical mouse houses a light source, such as an LED, and an image sensor. The light source irradiates the mousing surface, and the image sensor detects the reflected radiation. The image sensor then analyses the correlation between successive frames of image data as the PC optical mouse is moved over the mousing surface, and derives motion signals from the detected differences, which are used to control the motion of an on-screen pointer on the computer. A lens and/or various other optical elements are provided for manipulation of the radiation that is emitted from the light source and for directing the reflected radiation towards the image sensor. Typically, in a PC optical mouse, the radiation will be directed such that it is incident perpendicular to the image sensor die, in a similar fashion to the arrangement shown in Fig. 1.

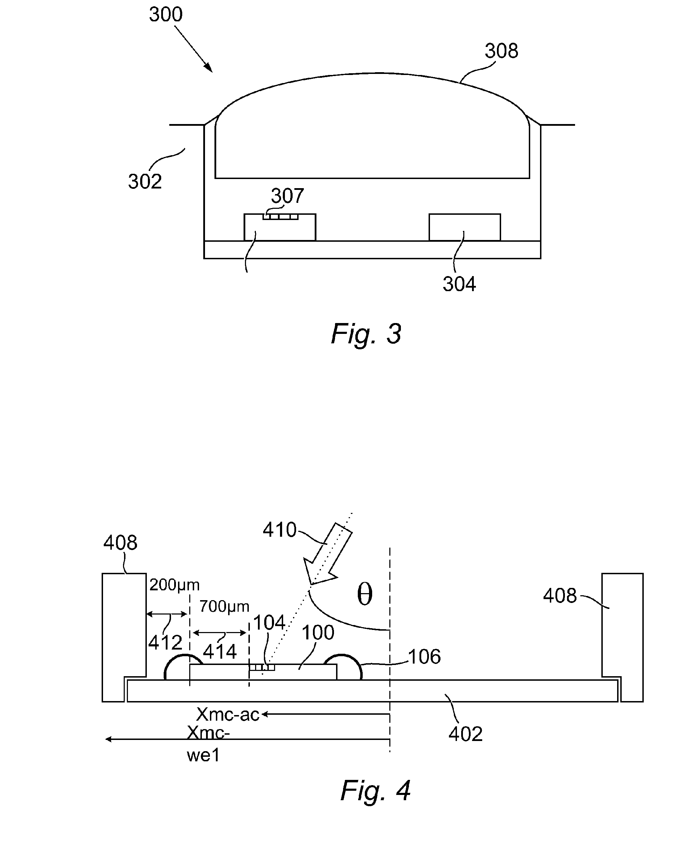

Another product that uses image sensors is the so-called "fingermouse", which is illustrated in Fig. 3. This is a touch pad style input device that is used for mobile devices, such as mobile telephones and personal digital assistants. It can also be used for larger devices such as netbooks, notebooks and laptops. The fingermouse shares some similarities with the PC optical mouse. A fingermouse module 300 (which is incorporated in a device 302, such as a mobile device) comprises a light source 304, such as an LED, and an image sensor 306 comprising a pixel array 307. In contrast to the PC optical mouse, the device 302 housing the fingermouse module 300 is held stationary while a digit (finger or thumb) or a stylus is moved over a mousing surface 308. The image sensor 306 analyses the correlation between successive frames of image data as the digit or stylus is moved over the mousing surface 308, and derives motion signals from the detected differences, which are used to control the motion of an on-screen pointer on the mobile device. The mousing surface 308 forms part of an optical element for the manipulation of the radiation that is emitted from the light source 304 and for directing the reflected radiation towards the image sensor 306. The fingermouse may advantageously be arranged to analyse the frustration of total internal reflection that occurs at points where ridges of skin or features of a stylus contact the mousing surface.

Fingermice are used in devices where there is a very high pressure for miniaturisation, particularly for mobile devices. This is in contrast to the field of PC optical mice, where there is a greater design freedom in the layout of the components. In a PC optical mouse, the light source can be situated relatively far from the image sensor, and the available space is greater due to the form factor of the PC optical mouse, being of a size to fit comfortably in the grip of a user's hand.

In addition to the different packaging constraints, the technical challenges faced by the fingermouse designer are very different from those faced by the designer of a PC optical mouse. The image sensor of a PC optical mouse is operated "face down" on the mousing surface which will typically be opaque, meaning that the sensor is operating in an environment that is dark except for the radiation from the light source. In contrast, the image sensor of a fingermouse is operated "face up" and so in addition to the light from the sensor, the sensor can receive a measure of ambient light, which can vary greatly, depending for example whether the mobile device is being used at daytime or night-time, under artificial light (of various different types) or natural light. This introduces potential sources of noise that can spoof the image sensor.

In addition, the range of motion is very much smaller in a fingermouse as compared with a PC optical mouse. A PC optical mouse may be moved over a range of many centimetres, at relatively high velocity, while a digit or stylus may move relatively slowly over a range of a few millimetres in a fingermouse. This means that the image processing algorithms for recognition of the differences between different frames need to be more sensitive for a fingermouse.

In order to save on "z-height", i.e. the overall height of the module, it is known to provide a fingermouse with an off-axis illumination, an example of which is shown in Fig. 4, where the optical axis of the incident radiation 410 is at an angle θ relative to the module's perpendicular axis. In this type of sensor the die 100 is moved towards the edge of a substrate 402. The light source is omitted from this figure for ease of illustration, as are the optical components of the fingermouse.

A spacing 412 is required for the bonded wire 106 and a spacing 414 exists between the edge of the pixel array 104 and the edge of the die 100. The spacing 412 is the distance required for incorporation of the loop of the bond wires 106 and the tolerance of the relevant engineering processes, and will vary between different designs, however a value of around 200 µm is typical. The size of the spacing 414 between the edge of the pixel array 104 and the die 100 will vary between different sensors, however in this example the spacing is around 700 µm, meaning there is a total of 900 µm between the edge of pixel array 104 and the inner edge of the housing 408.

Due to the module height and the design of the lens and/or other optical elements, the image is formed at a distance X_{mc}-_{ac} from the centre of the module, that is, the X position of the array centre is displaced from the X position of the module centre by the distance illustrated in the diagram.

Although the z-height is reduced by this layout, other reductions in module size of an image sensor with off-axis illumination are desirable.

According to an aspect of the invention there is provided an image sensor comprising an array of radiation sensitive pixels formed on an image sensing die, and in which a principle optical axis of radiation incident on the pixel array is inclined with respect to a direction perpendicular to the pixel array, and in which said pixel array is formed off-centre within the image sensing die.

The "array of radiation sensitive pixels" is referred to as a "pixel array" for convenience. The terms are equivalent.

Preferably the pixel array is formed as close as possible to an edge of the die.

Preferably, a guard ring portion, seal ring portion, scribe line remnant portion and die positioning tolerance distance portion are provided between the edge of the die and an edge of the pixel array.

Preferably, a housing tolerance positioning portion is provided between the edge of the image sensing die and the edge of a housing of the image sensor.

Preferably said edge at which the pixel array is formed is an edge which is free from bond pads.

Preferably, the image sensor is part of a fingermouse.

The present invention will now be described, by way of example only, with reference to the accompanying drawings in which:
Fig. 1 illustrates selected components of a prior art image sensor package;
Fig. 2 illustrates a plan view of selected elements of the image sensing die shown in Fig. 1;
Fig. 3 illustrates the operational principles of a fingermouse;
Fig. 4 illustrates a prior art image sensing package in which an incident angle of radiation is inclined with respect to the perpendicular direction to the substrate of the package;
Fig. 5 illustrates an embodiment of an image sensor die in which the pixel array is formed off-centre within the die;
Fig. 6 shows a cross-section of an image sensor package incorporating the die of Fig. 5; and
Fig. 7 shows a cross-section of an alternative image sensor package incorporating the die of Fig. 5.

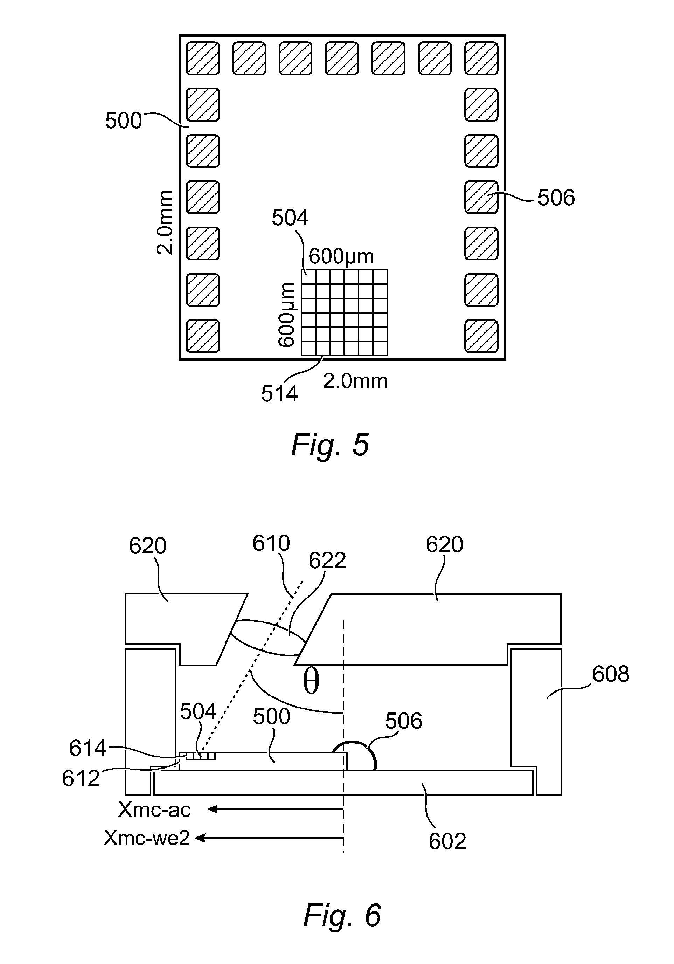

As represented in Fig. 5, the image sensing pixel array 504 can be moved away from the centre of the die 500. In a preferred embodiment the image sensing array 504 is located as close as possible to an edge of the die 500. The edge of the die to which the image sensing array 504 is to be aligned is preferably chosen as one that does not include any bond pads 506. This means the width of the bond pads does not need to be taken into account when calculating a spacing 514 between the edge of pixel array 504 and the edge of the die 500. It is to be appreciated that if all four sides of the die 500 are provided with bond pads 506 that it is still beneficial to move the array 504 towards the edge.

Fig. 6 shows a cross section of an image sensor package comprising the die 500 of Fig. 5. As can be seen in the figure, the image sensing array 504 is moved towards the outer edge of the die 500 as compared with the position of the image sensing array 104 within the die 100 shown in Fig. 4. Because the array 504 is provided at an edge with no bond pads, the cross section shows only bond wires 506 at one side of the die 500. It will be appreciated that bond wires 506 will also be provided at the other sides of the die 500, but which are not shown in the cross-section. Incident radiation 610 is shown off-set by an angle θ to the perpendicular, the angle being the same as that illustrated in Fig. 4. The effect is achieved by optical elements 620, 622. However, in this case because the image sensing array 504 is off-set from the centre of the die 500 the spacings 412 and 414 in Fig. 4 can be minimised or done away with altogether.

The X position of the image plane is at the same absolute position as the X position of the image plane shown in Fig. 4, namely X_{mc-ac} will have the same value in Fig. 6 as compared with Fig. 4. However, there is a substantial reduction in the size of the module as illustrated by the relative sizes of X_{mc}-_{we2} in Fig. 6 as compared with X_{mc}-_{we1} in Fig. 4 (note that the subscript "we" in the notation of the figures refers to the wall edge of the housing). Because the distance X_{mc}-_{ac} is the same no modification of the optical system as between Figs. 4 and 6 is required.

In an ideal case the distance 414 between the pixel array and the die edge and the distance 412 between the die edge and housing edge can both be totally eliminated, that is, reduced to zero or as close to zero as possible. In that case, there will be a space saving of 900 µm at one side of the housing in the arrangement of Fig. 6 as compared with the arrangement of Fig. 4. Due to symmetry of the module, the same amount is saved on the other side, meaning that a reduction in width of the module of up to 1.8 mm can be achieved.

In practice, however it is not possible to reduce the spacings 412 and 414 entirely to zero and there will be some non-zero value for each of these spacings, represented as the distance 612 between the die edge and housing edge and the distance 614 between the pixel array and the die edge in Fig. 6.

Typically, a guard ring will be placed around the pixel array 504 to prevent carriers generated elsewhere in the substrate from reaching the pixels' sensitive nodes being collected and causing an apparent increase of brightness of the image because they cannot be distinguished from photogenerated charge. The guard ring is typically a deep implant and is typically biased at a positive voltage to collect these charges. If the substrate is of a P-type conductivity then the guard ring will typically comprise a deep implant N-well. The pixel array to die edge distance 614 therefore typically includes the width of a guard ring, which may typically be around 20 µm.

There is also typically a seal ring around the edge of the die 500 composed of various structures both inside the material of the substrate 500 and on the surface of the substrate 602 (the substrate here is the semiconductor material, typically silicon, from/on which the die 500 is formed). This seal ring is designed to prevent stress generated during the sawing/dicing of the silicon substrate from propagating into the die which could cause device failure or unreliability. The width of the seal ring is typically similar to that of the guard ring, being about 20 µm or so. Therefore the pixel array to die edge distance 614 also includes a contribution from the seal ring.

The sensor die also requires space for a scribe line for sawing/dicing of the wafer to form the individual dies. Typically a gap of around 100 µm needs to be provided between dies and 60 µm of this is consumed by the saw blade during the dicing/sawing process, which leaves around 20 µm between the edge of the sawn silicon and seal ring on each side of each die. The pixel array to die edge distance 614 therefore also includes a contribution from the scribe line remnant.

There will also be a contribution from the placement tolerance of the die. It is required that the image sensing array 504 is placed within the image sensing plane, but the tolerance of this will depend upon the accuracy of the manufacturing process and will typically add around 20 µm or so to the total, that is, the pixel array to die edge distance 614 includes a contribution from the die placement tolerance.

The placement of the housing 608 also introduces a placement tolerance similar in magnitude to that of the die, namely around 20 µm.

The total of all these tolerances for a typical example might be 100 µm, so instead of an ideal saving of 900 µm at each side, a saving of 800 µm would represent a more realistic figure. This would result in a module size being able to be reduced by 1.6 mm.

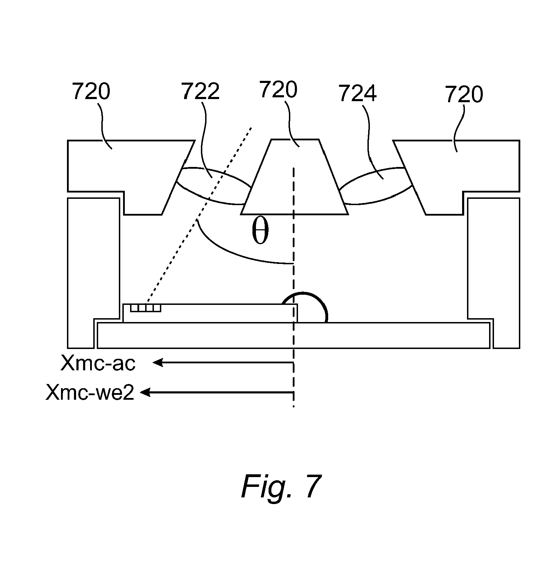

Fig. 7 shows the same arrangement as Fig. 6, with an alternative optical elements 720, 722, 724 arranged to provide first and second optical channels defining two different image planes at which different pixel arrays may be formed.

It will be appreciated that the exact dimensions involved will depend upon the type of sensor being used and that the principles can be applied to any system where there is off axis illumination. It will be appreciated that the invention can be applied to any type of digital image sensor, including CMOS or CCD sensors. Various improvements and modifications can be made to the above without departing from the scope of the invention.

## Claims

1. A fingermouse image sensor comprising an array of radiation sensitive pixels formed on an image sensing die, and in which a principle optical axis of radiation incident on the pixel array is inclined with respect to a direction perpendicular to the pixel array, and in which said pixel array is formed off-centre within the image sensing die and wherein the pixel array is formed as close as possible to an edge of the die.

2. The fingermouse image sensor of claim 1, wherein a guard ring portion, seal ring portion, scribe line remnant portion and die positioning tolerance distance portion are provided between the edge of the die and an edge of the pixel array.

3. The fingermouse image sensor of any preceding claim, wherein a housing tolerance positioning portion is provided between the edge of the image sensing die and the edge of a housing of the image sensor.

4. The fingermouse image sensor of any preceding claim, wherein said edge at which the pixel array is formed is an edge which is free from bond pads.
